(19) Europäisches Patentamt
European Patent Office
Office européen des brevets

(11) **EP 4 336 579 A1**

(12) **EUROPEAN PATENT APPLICATION**

(43) Date of publication:
**13.03.2024 Bulletin 2024/11**

(21) Application number: **23192999.3**

(22) Date of filing: **23.08.2023**

(51) International Patent Classification (IPC):
$H01M\ 4/04$ (2006.01)    $H01M\ 4/139$ (2010.01)
$H01M\ 4/62$ (2006.01)    $H01M\ 10/0525$ (2010.01)

(52) Cooperative Patent Classification (CPC):
H01M 4/0404; H01M 4/139; H01M 4/623;
H01M 10/0525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.09.2022 JP 2022139167**

(71) Applicant: **TOYOTA JIDOSHA KABUSHIKI KAISHA**
**Toyota-shi, Aichi-ken, 471 8571 (JP)**

(72) Inventors:
• **UEDA, Masashi**
  **Toyota-shi, 471-8571 (JP)**
• **YANAGI, Takuo**
  **Toyota-shi, 471-8571 (JP)**
• **KOJIMA, Shinji**
  **Toyota-shi, 471-8571 (JP)**
• **OKUBO, Sokichi**
  **Toyota-shi, 471-8571 (JP)**

(74) Representative: **D Young & Co LLP**
**120 Holborn**
**London EC1N 2DY (GB)**

(54) **ELECTRODE, BATTERY, AND METHOD FOR PRODUCING ELECTRODE**

(57)    A main object of the present disclosure is to provide an electrode capable of reducing the resistance of a battery and also capable of improving resistance to high temperature storage. The present disclosure achieves the object by providing an electrode to be used for a battery, the electrode including a current collector and an electrode layer, wherein the electrode layer includes layers in the order of a first layer and a second layer; the first layer contains a first binder, the second layer contains a second binder, and a degree of swelling of the first binder is lower than a degree of swelling of the second binder.

**FIG. 1**

**Description**

Technical Field

The present disclosure relates to an electrode, a battery, and a method for producing an electrode.

Background Art

In recent years, accordance with the rapid spread of electronic apparatus such as a personal computer and a portable telephone, the development of a battery used for the power source thereof has been advanced. Also, in the automobile industry, the development of a battery used for hybrid electric vehicles (HEV), plug-in hybrid electric vehicles (PHEV), or battery electric vehicles (BEV) has been advanced. Among various batteries, a lithium ion secondary battery has an advantage of high energy density.

A battery represented by the lithium ion secondary battery usually comprises a cathode, an anode, and an electrolyte layer arranged between the cathode and the anode. The cathode usually includes a cathode current collector, and a cathode layer containing a cathode active material. Also, the anode usually includes an anode current collector, and an anode layer containing an anode active material.

For example, Patent Literature 1 discloses a multi-layered electrode structure body in which electrode layers including a binder configured by at least a polymer, and an electrode material are layered on a current collector, wherein a first electrode layer arranged to contact a current collecting material has a different material composition or a different blending ratio from that of a second electrode layer arranged on the first electrode layer.

Patent Literature 2 discloses a separation film interposed between a cathode and an anode of a lithium battery, the separation film comprising a base material, a first layer and a second layer arranged on an entire surface of the base material, wherein different kind of binders are used in the first layer and the second layer.

Patent Literature 3 discloses a method for producing an electrode for a secondary battery, the method comprising: a step of pasting a slurry for first layer on a surface of a current collector, a step of pasting a slurry for second layer on the slurry for first layer before the slurry for first layer is dried, and a step of obtaining a layered structure in which layers in the order of a first layer and a second layer are layered on the current collector, by drying the slurry for first layer and the slurry for second layer after pasting the slurry for first layer and the slurry for second layer, wherein the first layer is an active material layer, the second layer is an insulating layer not containing an active material, and different kind of binders make viscosity of the slurries different.

Patent Literature 4 discloses an electrode for lithium ion secondary battery comprising a current collector and an electrode layer, wherein the electrode layer includes a first electrode layer and a second electrode layer of which binder resin concentration is higher than a binder resin concentration of the first electrode layer.

Citation List

Patent Literatures

Patent Literature 1: Japanese Patent Application Laid-Open (JP-A) No. 2001-307716
Patent Literature 2: JP-A No. 2020-136276
Patent Literature 3: JP-A No. 2019-096501
Patent Literature 4: International Application Publication: WO 2011/142083

Summary of Disclosure

Technical Problem

Inventors of the present disclosure have thoroughly researched and found out that the capacity may be degraded when the battery is stored under high temperature (such as at 60°C). Also, reduction of initial resistance is required for a battery. The present disclosure has been made in view of the above circumstance, and a main object thereof is to provide an electrode capable of reducing the resistance of a battery and also capable of improving resistance to high temperature storage.

Solution to Problem

[1] An electrode to be used for a battery, the electrode comprising:

a current collector and an electrode layer, wherein
the electrode layer includes layers in the order of a first layer and a second layer from the current collector side;
the first layer contains a first binder;
the second layer contains a second binder; and
a degree of swelling of the first binder to a liquid electrolyte is lower than a degree of swelling of the second binder to the liquid electrolyte.

[2] The electrode according to [1], wherein the degree of swelling of the first binder to the liquid electrolyte is 25% or less, and the degree of swelling of the second binder to the liquid electrolyte is larger than 25%.
[3] The electrode according to [1] or [2], wherein each of the first binder and the second binder includes a fluorine-containing binder.
[4] The electrode according to any one of [1] to [3], wherein a main constituting unit of the first binder and the second binder is the same.
[5] The electrode according to any one of [1] to [4], wherein each of the first layer and the second layer contains an active material.
[6] The electrode according to any one of [1] to [5], wherein

each of the first layer and the second layer contains an active material and a conductive material;
the first layer contains a first composite body in which the conductive material and the first binder are adhered to a surface of the active material; and
the second layer contains a second composite body in which the conductive material and the second binder are adhered to a surface of the active material.

[7] A battery including a cathode, an anode, and an electrolyte layer arranged between the cathode and the anode, wherein
at least one of the cathode and the anode is the electrode according to any one of [1] to [6].
[8] The battery according to [7], wherein the battery is a lithium ion battery.
[9] A method for producing an electrode to be used for a battery, the method comprising:

a first layer forming step of forming a first layer containing a first binder by a dry method on a current collector; and
a second layer forming step of forming a second layer containing a second binder by a dry method on a surface of the first layer that is opposite to the current collector side, and forming an electrode layer including the first layer and the second layer; wherein
a degree of swelling of the first binder to a liquid electrolyte is lower than a degree of swelling of the second binder to the liquid electrolyte.

[10] The method for producing the electrode according to [9], wherein

in the first layer forming step, a first composite body, in which a conductive material and the first binder are adhered to a surface of an active material, is pasted on the current collector by a dry method to form the first layer; and
in the second layer forming step, a second composite body, in which a conductive material and the second binder are adhered to a surface of an active material, is pasted on a surface of the first layer that is opposite to the current collector side by a dry method, to form the second layer.

Advantageous Effects of Disclosure

The electrode in the present disclosure exhibits the effects of reducing the resistance of a battery and also improving resistance to high temperature storage.

Brief Description of Drawings

FIG. 1 is a schematic cross-sectional view exemplifying the battery in the present disclosure.
FIG. 2 is a schematic cross-sectional view exemplifying the electrode in the present disclosure.
FIGS. 3A and 3B are schematic plan views exemplifying the electrode in the present disclosure.
FIG. 4 is a flow chart exemplifying the method for producing the electrode in the present disclosure.
FIG. 5 is a graph showing a relation between the degrees of swelling of the binders and the degrade rates of the peel strength after high temperature storage regarding the binders used in Comparative Examples 1 to 3.
FIG. 6 is a graph showing a relation between the peel strength after high temperature storage and the capacity durability regarding the evaluation cells in Comparative Examples 1 to 3.
FIG. 7 is a graph showing a relation between the capacity durability after high temperature storage and the thickness rate of the first layer regarding the evaluation cells in Comparative Example 1 and Examples 1 to 3.

Description of Embodiments

The embodiments in the present disclosure will be hereinafter explained in details with reference to drawings. Each drawing described as below is a schematic view, and the size and the shape of each portion are appropriately exaggerated in order to be understood easily. Furthermore, in the present description, upon expressing an embodiment of arranging one member with respect to the other member, when it is expressed simply "on" or "below", both of when the other member is directly arranged on or below the one member so as to contact with each other, and when the other member is arranged above or below the one member interposing an additional member, can be included unless otherwise described.

A. Electrode

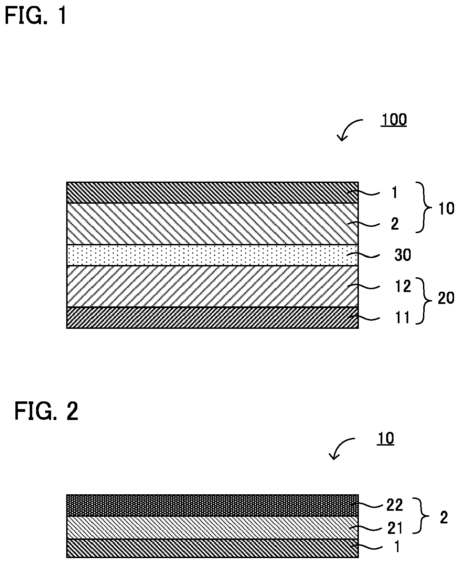

The electrode in the present disclosure is used for a battery. FIG. 1 is a schematic cross-sectional view exemplifying the battery in the present disclosure. Battery 100 illustrated in FIG. 1 includes cathode 10, anode 20, and electrolyte layer 30 arranged between the cathode 10 and the anode 20. The cathode 10 includes cathode current collector 1, and cathode layer 2 arranged between the cathode current collector 1 and the electrolyte layer 30. Meanwhile, the anode 20 includes anode current collector 11, and anode layer 12 arranged between the anode current collector 11 and the electrolyte layer 30. The electrode in the present disclosure may be a cathode, may be an anode, and may be the both of the cathode and the anode.

FIG. 2 is an explanatory view explaining the electrode in the present disclosure. FIG. 2 exemplifies a case when the electrode is a cathode. Cathode 10 includes cathode current collector 1 and cathode layer 2, and the cathode layer 2 includes layers in the order of first layer 21 and second layer 22 from the cathode current collector 1 side. The first layer 21 contains a first binder, the second layer 22 contains a second binder, and a degree of swelling of the first binder to a liquid electrolyte is lower than a degree of swelling of the second binder to the liquid electrolyte.

The inventors of the present disclosure have obtained a knowledge that adhesiveness between the current collector and the electrode layer was degraded since the binder swelled with the liquid electrolyte during storage at a high temperature (such as 60°C) of the battery, and as a result, the electron conductivity was deteriorated to cause reduction of capacity. Meanwhile, it has been found out that the battery resistance became high when a binder with low degree of swelling was used, since coverage of the conductive material to an active material was degraded due to its high melt viscosity. Then, it has been found out that the electrode with reduced battery resistance and also with improved resistance to high temperature storage was obtained when the electrode had a multi-layered structure, a first binder with a low degree of swelling was used in a first layer arranged on a current collector, and a second binder with high degree of swelling was used in a second layer arranged on the first layer. Thereby the present invention has been completed.

1. Electrode layer

The electrode layer in the present disclosure includes layers in the order of a first layer and a second layer from the current collector side. The first layer contains a first binder, the second layer contains a second binder, and a degree of swelling of the first binder to a liquid electrolyte is lower than a degree of swelling of the second binder to the liquid electrolyte.

(1) First layer

The first layer in the present disclosure is positioned between the current collector and the second layer, and contains a first binder. The degree of swelling of the first binder to a liquid electrolyte is lower than the degree of swelling of the second binder to the liquid electrolyte. When the first layer contains the first binder with low degree of swelling, swelling of the binder during high temperature storage can be restrained, and the degrade in adhesiveness between the current collector and the electrode layer can be inhibited. As a result, degrade in electron conductivity can be inhibited, and degrade in capacity durability can be suppressed. It is preferable that the first layer directly contacts the current collector.

The first binder is not particularly limited if it is a binder with lower degree of swelling to a liquid electrolyte than that of the second binder included in the second layer. The degree of swelling of the first binder is, for example, 25% or less, may be 23% or less, and may be 21% or less. In the present disclosure, the degree of swelling of the binder refers to a weight increase rate of a binder alone when it is soaked in a liquid electrolyte at 60°C for 24 hours, and in specific, it is a value obtained as follows. Here, the liquid electrolyte used for a measurement of the degree of swelling is preferably the same liquid electrolyte as that configures the battery.

First, the weight of a binder (weight of the binder before soaking) processed to a sheet shape is measured. Next, the binder is soaked in a liquid electrolyte at 60°C for 24 hours. The weight of the binder (weight of the binder after soaking) taken out from the liquid electrolyte is measured. The degree of swelling of the binder can be determined by a following formula based on a value obtained by the weight of the binder increased after soaking divided by the weight of the binder before soaking:

```
Degree of swelling of binder (%) = ((Weight of binder

after soaking) - (Weight of binder before soaking)) /

(Weight of binder before soaking) * 100.
```

The first binder is usually a polymer. The first binder preferably includes, for example, $[-CH_2-CF_2-]$ (it may be hereinafter referred to as formula 1) as a constituting unit. Further, the first binder preferably includes a constituting unit represented by the formula 1 as a main body of the constituting unit. "Main body of the constituting unit" means that the ratio (molar ratio) is the most among all the constituting units configuring the binder. The proportion of the constituting unit represented by the formula 1 with respect to all the constituting units configuring the first binder is, for example, 50 mol% or more, may be 70 mol% or more, and may be 90 mol% or more.

The first binder may include, for example, $[-C_2F_4-]$ (it may be hereinafter referred to as formula 2) as a constituting unit. Further, the first binder may include the constituting unit represented by the formula 2 as a main body of the constituting unit. The proportion of the constituting unit represented by the formula 2 with respect to all the constituting units configuring the first binder is, for example, 50 mol% or more, may be 70 mol% or more, and may be 90 mol% or more.

The first binder may or may not include $[-CF_2CF(CF_3)-]$ (it may be hereinafter referred to as formula 3) as a constituting unit. In the former case, the first binder may include the constituting unit represented by the formula 1 or the formula 2, and the constituting unit represented by the formula 3.

Specific examples of the first binder may include polyvinylidene fluoride (PVDF), a polyvinylidene fluoride - polyhexafluoropropylene copolymer (PVDF-HFP), polytetra fluoroethylene (PTFE), and a fluorine-containing binder (fluoride-based binder) such as a fluorine rubber.

Additional examples of the first binder may include an acrylic resin-based binder such as polyacrylate, polymethylacrylate, polyethylacrylate, polypropylacrylate, polybutylacrylate, polyhexylacrylate, poly2-ethylhexylacrylate, and polydecylacrylate; a methacrylate resin-based binder such as polymethacrylate, polymethylmethacrylate, polyethylmethacrylate, polybutylmethacrylate, and poly2-ethylhexylmethacrylate; an olefin resin-based binder such as polyethylene, polypropylene, and polystyrene; an imide resin-based binder such as polyimide and polyamideimide; an amide resin-based binder such as polyamide; a polycarbonate-based binder such as polyitaconic acid, polycrotonic acid, polyfumaric acid, polyangelic acid, and carboxymethylcellulose; and a rubber-based binder such as a butadiene rubber, a hydride butadiene rubber, a styrene butadiene rubber (SBR), a hydride styrene butadiene rubber, a nitrile butadiene rubber, a hydride nitrile butadiene rubber, and an ethylene propylene rubber.

It is preferable that the first binder has higher crystallinity and higher melting point than those of the second binder. The melting point of the first binder is, for example, 155°C or more and 200°C or less, and preferably 160°C or more and 180°C or less. The melting point of the binder may be known by a differential scanning calorimetry (DSC) in conformity to, for example, JIS K 7121.

The first binder is, for example, in a granular shape. The particle of the first binder may have the average particle size of 10 nm or more and 1000 nm or less, may have the average particle size of 50 nm or more and 500 nm or less, and may have the average particle size of 100 nm or more and 300 nm or less.

The proportion of the first binder in the first layer is not particularly limited, and for example, it is 0.1 weight% or more, may be 0.5 weight% or more, and may be 1 weight% or more. Meanwhile, the proportion is, for example, 15 weight% or less, may be 10 weight% or less, and may be 5 weight% or less.

The first layer usually includes an active material. The active material in the first layer may be a cathode active material and may be an anode active material.

The active material in the present disclosure is, for example, a lithium-transition metal compound oxide. In other words, it contains Li, $M_1$ ($M_1$ is a transition metal of one kind or two kinds or more), and O. Examples of the transition metal $M_1$ may include Ni, Co, Mn, Ti, V, Cr, Fe, Cu, and Zn. Among them, the active material preferably contains at least one kind of Ni, Co, and Mn as a transition metal. A part of the transition metal $M_1$ may be substituted with a metal (including semimetal) belonging to the 13th to the 17th groups in the periodic table. Typical examples of the metal belonging to the 13th to the 17th groups in the periodic table may include Al.

Specific examples of the active material in the first layer may include a rock salt bed type active material such as $LiCoO_2$, $LiMnO_2$, $LiNiO_2$, $Li(Ni,Co,Mn)O_2$, and $Li(Ni,Co,Mn)O_2$; a spinel type active material such as $LiMn_2O_4$, $Li(Ni_{0.5}Mn_{1.5})O_4$ and $Li_4Ti_5O_{12}$; and an olivine type active material such as $LiFePO_4$, $LiMnPO_4$, $LiNiPO_4$, and $LiCoPO_4$.

The particle of the active material may have the average particle size of, for example, 1 um or more and 50 um or less, may have the average particle size of 2 um or more and 30 um or less, and may have the average particle size of 3 um or more and 10 um or less. The proportion of the active material in the first layer is not particularly limited, and for example, it is 40 weight% or more, may be 60 weight% or more and may be 80 weight% or more.

The first layer may further contain a conductive material. Examples of the conductive material may include a carbon material. Examples of the carbon material may include a particulate carbon material such as carbon black, and a fiber carbon material such as carbon fiber, carbon nanotube (CNT), and carbon nanofiber (CNF). Examples of the carbon black may include acetylene black(AB), Ketjen black (KB), and furnace black (FB).

The proportion of the conductive material in the first layer is not particularly limited, and for example, it is 0.5 weight% or more, and may be 1 weight% or more. Meanwhile, the proportion of the conductive material is, for example, 20 weight% or less, and may be 10 weight% or less.

Also, the first layer usually contains a liquid electrolyte described later.

The first layer preferably contains a first composite body in which the conductive material and the first binder are adhered to a surface of the active material. Thereby, the conductive material contacts well with the active material. In the first composite body, in the surface of the active material, the conductive material and the first binder are preferably adhered in the dispersed state.

The first composite body is usually in a granular shape. The coverage of the binder and the conductive material in the first composite body is, for example, 40% or more and 80% or less, and may be 50% or more and 75% or less. The coverage of the conductive material and the binder may be calculated by, for example, obtaining a secondary electron image of the composite body by an observation with a scanning electron microscope (SEM), and conducting a binary code processing.

The thickness of the first layer is, for example, 1 um or more and 500 um or less, may be 5 um or more and 250 um or less, and may be 15 um or more and 150 um or less.

The method for forming the first layer will be described in "C. Method for producing electrode 1. First layer forming step" later.

(2) Second layer

The second layer is positioned in a surface of the first layer that is opposite to the current collector side. The second layer contains a second binder with higher degree of swelling than the degree of swelling of the first binder. The second layer contains the second binder with high degree of swelling, and thus the coverage of the conductive material with respect to the active material becomes high, and the battery resistance decreases.

The second binder is not particularly limited, if it is a binder with higher degree of swelling than that of the first binder included in the first layer. The degree of swelling of the second binder to a liquid electrolyte is, for example, more than 25%, may be 50% or more, and may be 100% or more. Meanwhile, the degree of swelling of the second binder to a liquid electrolyte is not particularly limited, but for example, it is 200% or less, and may be 150% or less. Also, when $D_1$ (%) designates the degree of swelling of the first binder, and $D_2$ (%) designates the degree of swelling of the second binder, the difference between the $D_2$ and the $D_1$ is, for example, 50% or more, may be 70% or more, and may be 90% or more. The method for measuring the degree of swelling of the second binder to the liquid electrolyte is the same as the calculation method for the degree of swelling of the first binder. Preferable embodiments of the second binder are the same as those of the first binder described above.

A main body of the constituting unit of the first binder and the second binder is preferably the same. When the main constituting unit is the same, affinity of the first layer with the second layer improves. In specific, each of the first binder and the second bindery preferably include the constituting unit represented by the above described formula 1, as the main body of the constituting unit. In this case, the first binder may not include the constituting unit represented by the formula 3, and the second binder may include the constituting unit represented by the formula 3. For example, the first binder may be polyvinylidene fluoride (PVDF), and the second binder may be polyvinylidene fluoride-hexafluoro propylene (PVDF-HFP), which is a comonomer of vinylidene fluoride and hexafluoro propylene. Since PVDF-HFP has a branch structure of $-CF_3$ in a polymer chain, the crystallinity to PVDF is comparatively small, and the degree of swelling is large.

When the second binder includes a constituting unit HFP represented by the formula 3, the proportion of HFP included in the second binder with respect to all the constituting units configuring the second binder is, for example, 30 mol% or more, may be 40 mol% or more, and may be 50 mol% or more. Meanwhile, the proportion of HFP included in the second binder is, for example, 70 mol% or less, and may be 60 mol% or less.

The melting point of the second binder is, for example, preferably 100°C or more and 150°C or less.

The second binder is, for example, in a granular shape. The particle of the second binder may have an average particle size of 10 nm or more and 1000 nm or less, may have the average particle size of 50 nm or more and 500 nm or less, and may have the average particle size of 100 nm or more and 300 nm or less.

The proportion of the second binder in the second layer is not particularly limited, and for example, it is 0.1 weight% or more, may be 0.5 weight% or more, and may be 1 weight% or more. Meanwhile, the proportion is, for example, 15 weight% or less, may be 10 weight% or less, and may be 5 weight% or less.

The second layer usually includes an active material. Examples of the active material in the second layer may include those exemplified as active materials in the first layer. The active material in the first layer and the active material in the second layer may or may not have the same composition.

The second layer may further contain a conductive material. Examples of the conductive material in the second layer may include those exemplified as conductive materials in the first layer. The conductive material in the first layer and the conductive material in the second layer may or may not have the same composition.

Also, the second layer usually contains a liquid electrolyte described later.

The second layer preferably contains a second composite body in which the conductive material and the second binder are adhered to a surface of the active material. The reason therefor is to further improve the contact of the conductive material with the active material. In the second composite body, in the surface of the active material, the conductive material and the second binder are preferably adhered in the dispersed state.

The second composite body is usually in a granular shape. Sine the second binder has higher degree of swelling than the degree of swelling of the first binder, usually, the melt viscosity is lower than that of the first binder, and the coverage of the binder and the conductive material in the active material can be high. In other words, the coverage of the second binder and the conductive material in the second composite body is preferably higher than the coverage of the first binder and the conductive material in the first composite body. The coverage of the second binder and the conductive material in the second composite body is, for example, 70% or more and less than 100%, and may be 80% or more and 95% or less. The coverage in the second composite body can be calculated by the same method as that for the coverage in the first composite body.

The thickness of the second layer is, for example, 1 um or more and 500 um or less, may be 5 um or more and 250 um or less, and may be 15 um or more and 150 um or less.

The relation between the thickness of the second layer and the thickness of the first layer is not particularly limited, and the thickness of the second layer may be larger, the same, or smaller than the thickness of the first layer. "The thickness of the second layer and the thickness of the first layer are the same" means that the absolute value of the difference of the thickness between the two is 3 um or less.

$T_1$ designates the thickness of the first layer, and $T_2$ designates the thickness of the second layer. The rate of $T_1$ with respect to the total of $T_1$ and $T_2$, which is $T_1/(T_1+T_2)$ (%) is, for example, 30% or more, may be 40% or more, and may be 45% or more. Within the above range, the resistance to high temperature storage further improves. Also, the rate $T_1/(T_1+T_2)$ (%) is, for example, 70% or less, may be 60% or less, and may be 55% or less. Within the above range, the resistance of the battery can be further reduced.

The method for forming the second layer will be described in "C. Method for producing electrode 2. Second layer forming step" later.

2. Current collector

The current collector in the present disclosure collects currents of the electrode layer. The electrode current collector may be a cathode current collector, and may be an anode current collector. Examples of the material for the cathode current collector may include SUS, aluminum, nickel, iron, titanium, and carbon. Examples of the material for the anode current collector may include SUS, copper, nickel, and carbon. Also, examples of the shape of the electrode current collector may include a foil shape and a mesh shape.

3. Electrode

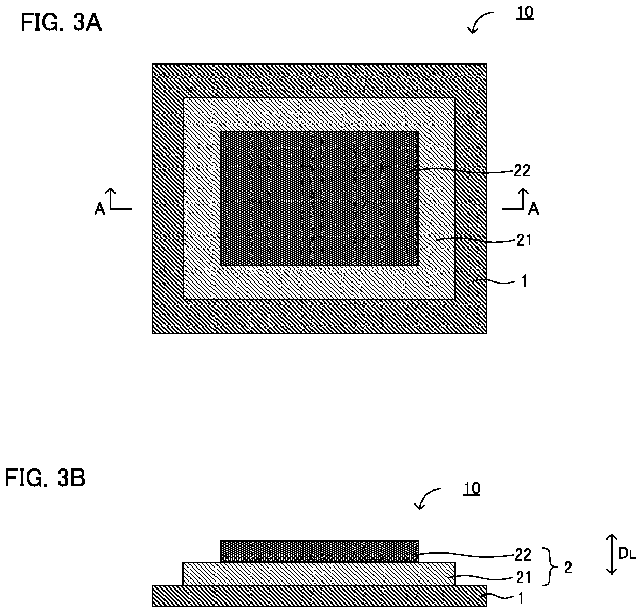

The electrode in the present disclosure includes a current collector and an electrode layer, and the electrode layer includes layers in the order of a first layer and a second layer from the current collector side. FIG. 3A is a schematic plan view exemplifying the electrode in the present disclosure, and FIG. 3B is a cross-sectional view of A-A in FIG. 3A. FIGS. 3A and 3B exemplify a case when the electrode is a cathode. In FIGS. 3A and 3B, in a plan view observed from layered direction $D_L$ of the cathode 10, the area of the cathode current collector 1 is larger than the area of the first layer 21. Also, the area of the first layer 21 is larger than the area of the second layer 22.

In a plan view of the electrode observed from the layered direction, $S_0$ designates the area of the current collector, $S_1$ designates the area of the first layer, and $S_2$ designates the area of the second layer. In the present disclosure, $S_0 > S_1 > S_2$ is preferable. Also, the first layer is preferably formed in approximately center of the current collector so as to overlap at least a part of the current collector in the plan view. Further, the second layer is preferably formed in approximately center of the first layer so as to overlap at least a part of the first layer in the plan view. In general, pressure tends to be released to the edge of the electrode during pressing, and thus the peel strength to the central part weakens to facilitate peel-off of the binder during swelling. For this reason, by setting the current collector, the first layer and the second layer in the electrode to be the above described areas and positions, the first layer containing the binder with lower degree of swelling is selectively positioned in the edge part, and thus the effect during swelling can be suppressed to reduce the electrode peeling of the edge part. Thereby, the capacity durability improves.

B. Battery

FIG. 1 is a schematic cross-sectional view exemplifying the battery in the present disclosure. Battery 100 illustrated in FIG. 1 includes cathode 10, anode 20, and electrolyte layer 30 arranged between the cathode 10 and the anode 20. At least one of the cathode 10 and the anode 20 corresponds to the electrode described in "A. Electrode" above.

According to the present disclosure, at least one of the cathode and the anode is the above described electrode, and thus the battery resistance can be reduced and also the resistance to high temperature storage can be improved.

1. Cathode

The cathode includes a cathode current collector and a cathode layer positioned in a surface of the cathode current collector that is the electrode layer side. The cathode in the present disclosure preferably corresponds to the electrode described above. Meanwhile, when the cathode in the present disclosure does not correspond to the electrode described above, usually, the anode in the present disclosure corresponds to the electrode described above. In this case, a conventional arbitrary cathode can be used as the cathode.

2. Anode

An anode includes an anode current collector, and an anode layer positioned in a surface of the anode current collector that is the electrode layer side. The anode in the present disclosure preferably corresponds to the electrode described above. Meanwhile, when the anode in the present disclosure does not correspond to the electrode described above, usually, the cathode in the present disclosure corresponds to the electrode described above. In this case, a conventional arbitrary anode can be used as the anode.

3. Electrolyte layer

The electrolyte layer in the present disclosure contains at least an electrolyte. Examples of the electrolyte may include an electrolyte solution (liquid electrolyte) and a gel electrolyte.

The liquid electrolyte contains, for example, a lithium salt and a solvent. Examples of the lithium salt may include an inorganic lithium salt such as $LiPF_6$, $LiBF_4$, $LiClO_4$ and $LiAsF_6$; and an organic lithium salt such as $LiCF_3SO_3$, $LiN(SO_2CF_3)_2$, $LiN(SO_2C_2F_5)_2$, and $LiC(SO_2CF_3)_3$. Examples of the solvent may include ethylene carbonate (EC), propylene carbonate (PC), butylene carbonate (BC), dimethyl carbonate (DMC), diethyl carbonate (DEC), and ethyl methyl carbonate (EMC). The solvent may be just one kind, and may be two kinds or more.

The gel electrolyte is usually obtained by adding a polymer to a liquid electrolyte. Examples of the polymer may include a polyethylene oxide, and a polypropylene oxide. The thickness of the electrolyte layer is, for example, 0.1 um or more and 1000 um or less. The electrolyte layer may include a separator.

4. Battery

The battery in the present disclosure is typically a lithium ion secondary battery. Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. Also, the battery in the present disclosure may be used as a power source for moving bodies other than vehicles (such as rail road transportation, vessel and airplane), and may be used as a power source for electronic products such as information processing equipment.

C. Method for producing electrode

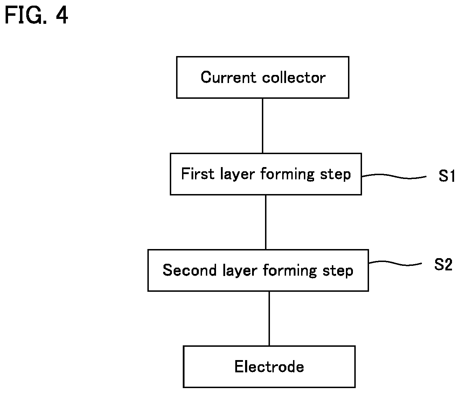

FIG. 4 is a flow-chart exemplifying the method for producing the electrode in the present disclosure. The method for producing an electrode shown in FIG. 4 provides a method for producing an electrode to be used for a battery, the method comprising: a first layer forming step S1 of forming a first layer containing a first binder by a dry method on a current collector; and a second layer forming step S2 of forming a second layer containing a second binder by a dry method on a surface of the first layer that is opposite to the current collector side, and forming an electrode layer including the first layer and the second layer; wherein a degree of swelling of the first binder to a liquid electrolyte is lower than a degree of swelling of the second binder to the liquid electrolyte. In the present disclosure, the dry method refers to a method for forming a layer without using a dispersion medium such as an organic solvent.

1. First layer forming step

In the first layer forming step, the first layer is preferably formed by pasting a first composite body in which a conductive material and a first binder are adhered to a surface of an active material, on a current collector by the dry method.
Examples of the method for producing the first composite body may include a method of compounding the active material, the first binder, and the conductive material using a compounding treatment device. The compounding treatment is preferably performed by the dry method. For example, compounding can be performed by mixing with measures such as a mixer, a bead mill, a ball mill, and a mortar, and among them, the mixer can be suitably used. In this case, the revolving number during compounding (applying load) may be, for example, 500 rpm or more and 20000 rpm or less, and may be 1000 rpm or more and 10000 rpm or less. Also, the treatment time may be 0.5 minute or more and 2 hours or less, may be 1 minute or more and 1 hour or less, may be 1 minute or more and 30 minutes or less, and may be 1 minute or more and 20 minutes or less.
Examples of the method for forming the first layer may include a method by preparing an electrode mixture including the first composite body, pasting the electrode mixture on a surface of the current collector by the dry method, and as required, heating to improve the adhesiveness and compressing to improve the mixture density. The mixture is preferably the one not including materials other than the first composite body, and even if materials other than the composite body is included, the proportion is preferably little such as 5 weight% or less and 1 weight% or less with respect to the composite body. Examples of the materials other than the composite body may include an additional conductive material and an additional binder. Regarding the additional conductive material, the additional binder, and the current collector, those exemplified in the explanation of the electrode described above can be used. Performing the layer forming treatment by the dry method allows reduction of drying time and reduction of amount of usage of an organic solvent. Also, the above described first composite body has the coverage of the conductive material and the binder that is suitable to form the electrode by the dry method. Regarding the method for pasting by the dry method, for example, an electrostatic method using an electrostatic screen is suitable.

2. Second layer forming step

In the second layer forming step, the second layer is preferably formed by pasting a second composite body, in which a conductive material and the second binder are adhered to a surface of an active material, on a surface of the first layer that is opposite to the current collector side by the dry method.
Examples of the method for producing the second composite body and the method for forming the second layer may be the same as the method for producing the first composite body and the method for forming the first layer.
The present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Comparative Example 1]

(1) Compounding cathode materials

First, a cathode active material (NCM, particle size of 3 to 10 um from Sumitomo Metal Mining Co., Ltd.), a conductive material (acetylene black, Li400 from Denka Company Limited.), and a binder (HSV1810, polyvinylidene fluoride, particle size of 150 nm from ARKEMA) were weighed so as to be the cathode active material : the conductive material : the binder = 97.5 / 1.5 / 1 (wt%), projected into an MP mixer from NIPPON COKE & ENGINEERING. CO., LTD., agitated in the conditions of 10000 rpm and 10 minutes to perform a compounding treatment, and thereby a composite body was obtained.

(2) Forming layer

The obtained composite body was pasted on a current collecting foil (aluminum foil having the thickness of 12 um) using an electrostatic screen forming machine (from Berg Co., Ltd.) by the dry method. On this occasion, the voltage was 1.5 kV, and the distance between the current collecting foil and the screen was 1 cm.

(3) Fixation

The binder was softened (melted) by applying the load of 5 t for 1 minute with a flat plate of which up and down surfaces were heated to 180°C, and the composite body was fixed on the current collecting foil to produce a cathode structure body including the cathode current collector (current collecting foil) and the cathode layer.

(4) Production of evaluation cell

Next, an anode active material (natural graphite) and a binder (SBR and CMC) were mixed, and then a dispersion medium was added to the obtained mixture and agitated to obtain an anode slurry. The obtained anode slurry was pasted on an anode current collector by a film applicator, and then dried at 80°C for 5 minutes. Thereby, an anode structure body including an anode current collector and an anode layer was obtained.
The cathode layer in the cathode structure body and the anode layer in the anode structure body were faced to each other interposing a separator, winded, and a liquid electrolyte was injected thereto to obtain an evaluation cell. The used liquid electrolyte was produced in manners such that, EC, DMC, and EMC were mixed in a volume ratio of EC : DMC : EMC = 3 : 4 : 3 to produce the mixture solvent, and $LiPF_6$ was dissolved therein so as to be 1 M.

[Comparative Example 2]

A cathode structure body was produced in the same manner as in Comparative Example 1, except that the binder in the cathode materials was changed to HSV900 (polyvinylidene fluoride, particle size of 150 nm from ARKEMA), and thereby an evaluation cell was produced.

[Comparative Example 3]

A cathode structure body was produced in the same manner as in Comparative Example 1, except that the binder in the cathode materials was changed to LBG8200 (particle size of 150 nm from ARKEMA), and thereby an evaluation cell was produced. Incidentally, LBG8200 is a copolymer of PVDF and HFP (hexafluoro propylene).

[Example 1]

(1) Compounding cathode materials

First, a cathode active material (NCM, particle size of 3 to 10 um from Sumitomo Metal Mining Co., Ltd.), a conductive material (acetylene black, Li400 from Denka Company Limited.), and a binder (HSV1810, polyvinylidene fluoride, particle size of 150 nm from ARKEMA) were weighed so as to be the cathode active material : the conductive material : the binder = 97.5 / 1.5 / 1 projected into an MP mixer from NIPPON COKE & ENGINEERING. CO., LTD., agitated in the conditions of 10000 rpm and 10 minutes to perform a compounding treatment, and thereby a first composite body was obtained.

Also, a cathode active material (NCM, particle size of 3 to 10 um from Sumitomo Metal Mining Co., Ltd.), a conductive material (acetylene black, Li400 from Denka Company Limited.), and a binder (LBG8200, particle size of 150 nm from ARKEMA) were weighed so as to be the cathode active material : the conductive material : the binder = 97.5 / 1.5 / 1 projected into an MP mixer from NIPPON COKE & ENGINEERING. CO., LTD., agitated in the conditions of 10000 rpm and 10 minutes to perform a compounding treatment, and thereby a second composite body was obtained.

(2) Forming layer

The obtained first composite body was pasted on a current collecting foil (aluminum foil having the thickness of 12 um) using an electrostatic screen forming machine (from Berg Co., Ltd.) by the dry method to form a first layer. On this occasion, the voltage was 1.5 kV, and the distance between the current collecting foil and the screen was 1 cm. Next, the obtained second composite body was pasted on the first layer by the dry method in the same conditions, and thereby a second layer was formed.

(3) Fixation

The binder was softened (melted) by applying the load of 5 t for 1 minute with a flat plate of which up and down surfaces were heated to 180°C, and the composite body was fixed on the current collecting foil to produce a cathode structure body including the cathode current collector, and the cathode layer including the first layer and the second layer formed on the cathode current collector. The thickness $T_1$ of the first layer was 100 um, and the thickness $T_2$ of the second layer was 100 um. In other words, the rate of $T_1$ with respect to the total of $T_1$ and $T_2$, which is $T_1/(T_1+T_2)$ (%) was 50%.

(4) Production of evaluation cell

An evaluation cell was produced in the same manner as in Comparative Example 1 except that the obtained cathode structure body was used.

[Measurement of degree of swelling and melting point of binder]

The degree of swelling and the melting point of the binders used in Comparative Examples and Example were measured by the method described above. The results are shown in Table 1.

[Measurement of coverage and powder resistance]

The composite bodies obtained in Comparative Examples and Example were observed by SEM, a binary code processing was performed thereto, and thereby the coverages of the binder and the carbon were respectively calculated. The resistance of the composite body was measured by an automatic powder resistance measurement system, low resistance version MCP-PD600. The results are shown in Table 1.

[Evaluation]

<IV Resistance>

The obtained evaluation cells were discharged for 10 seconds at the current I of 0.3 C, 0.5 C, and 1 C respectively, and the voltage decrease amounts $\Delta V$ in 10 seconds were measured. The IV resistance (inclination) was respectively calculated from the relation between the current I and $\Delta V$. The results are shown in Table 1.

[Measurement of capacity durability after high temperature storage]

The obtained evaluation cells were stored in a thermostatic tank at 60°C for 10 days. The capacity of the evaluation cells after 10 days was respectively measured to calculate the capacity durability ((capacity after storage / initial capacity) * 100%). The results are shown in Table 2.

[Measurement of peel strength decrease rate after high temperature storage]

The evaluation cells after storing in the thermostatic tank at 60°C for 10 days were taken apart to take out the cathode, and the peel strength between the cathode current collector and the electrode layer in the cathode was respectively measured with a 90° peel test machine. The decrease rate with respect to the peel strength before the storage was respectively calculated by the below formula. The results are shown in Table 2.

$$\text{Peel strength decrease rate} = ((\text{peel strength after}$$
$$\text{high temperature storage} - \text{peel strength before high}$$
$$\text{temperature storage}) / \text{peel strength before high}$$
$$\text{temperature storage}) * 100\%$$

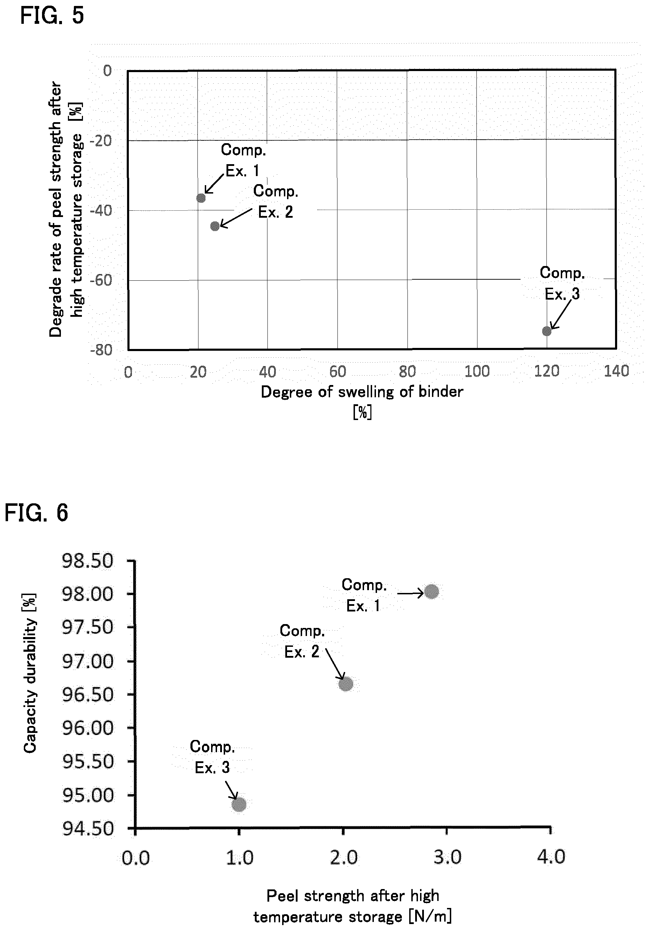

The relation between the degree of swelling of the binders used in Comparative Examples 1 to 3 and the decrease rate of peel strength is shown in FIG. 5. From FIG. 5, it was confirmed that the peel strength between the current collector and the electrode layer decreased when the degree of swelling of the binder was high. Also, the relation between the peel strength after high temperature storage and the capacity durability of the evaluation cells in Comparative Examples 1 to 3 is shown in FIG. 6. From FIG. 6, it was confirmed that the peel strength after high temperature storage and the capacity durability correlated.

[Table 1]

|  | Electrode layer structure | Kind of binder | Degree of swelling [%] | Melting point [°C] | Coverage of composite powder [%] | Powder resistance [Ω cm] | IV resistance [Ω] |
|---|---|---|---|---|---|---|---|
| Comp. Ex. 1 | Single layer | HSV1810 | 21 | 167 | 54.5 | 529.8 | 1.8 |
| Comp. Ex. 2 | Single layer | HSV900 | 25 | 165 | 75.0 | 104.7 | 1.5 |
| Comp. Ex. 3 | Single layer | LBG8200 | 120 | 147 | 93.0 | 49.7 | 1.1 |
| Example 1 | 2 layers First layer/ Second layer | HSV1810/ LBG8200 | 21/120 | 167/147 | 54.5/93.0 | 529.8/49.7 | 1.2 |

[Table 2]

|  | Capacity durability [%] | Peel strength | | |
|---|---|---|---|---|
|  |  | Before storage [N/m] | After storage [N/m] | Decrease rate [%] |
| Comp. Ex. 1 | 98.0 | 4.5 | 2.9 | -36.4 |
| Comp. Ex. 2 | 96.6 | 3.7 | 2.0 | -44.5 |
| Comp. Ex. 3 | 94.9 | 4.0 | 1.0 | -75.0 |
| Example 1 | 97.7 | 4.2 | 2.7 | -35.7 |

In Example 1, it was confirmed that the decrease of the peel strength after storage at 60°C was suppressed because the first layer containing the first binder with low degree of swelling was formed on the current collector. Further, as a result, it was confirmed that the degrade of electron conductivity was inhibited, and the degrade in capacity durability was inhibited. Also, it was confirmed that a cell with low resistance was obtained when the second layer containing the second binder with high degree of swelling was formed.

[Example 2 and Example 3]

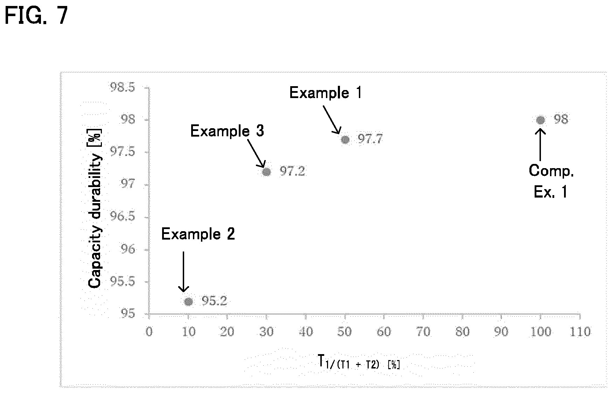

The cathode structure body was respectively produced in the same manner as in Example 1, except that the rate of the thickness $T_1$ of the first layer with respect to the total of the thickness $T_1$ of the first layer and the thickness $T_2$ of the second layer, which is $T_1/(T_1+T_2)$ (%) was changed to 10% in Example 2, and to 30% in Example 3, and thereby evaluation cells were respectively produced. The results of measuring the capacity durability after high temperature storage in the same manners as above are shown in FIG. 7, together with the results of Example 1 and Comparative Example 1.

As shown in FIG. 7, it was confirmed that the capacity durability after high temperature storage of Example 1 and Example 3, of which $T_1/(T_1+T_2)$ were 30% or more, was respectively further higher than that of Example 2.

Reference Sings List

| 1 | cathode current collector |
| 2 | cathode layer |
| 10 | cathode |
| 20 | anode |
| 21 | first layer |
| 22 | second layer |
| 11 | anode current collector |
| 12 | anode layer |
| 30 | electrolyte layer |
| 100 | battery |

**Claims**

1. An electrode to be used for a battery, the electrode **characterized by** comprising:

   a current collector and an electrode layer, wherein
   the electrode layer includes layers in the order of a first layer and a second layer from the current collector side;
   the first layer contains a first binder;
   the second layer contains a second binder; and
   a degree of swelling of the first binder to a liquid electrolyte is lower than a degree of swelling of the second binder to the liquid electrolyte.

2. The electrode according to claim 1, **characterized in that** the degree of swelling of the first binder to the liquid electrolyte is 25% or less, and the degree of swelling of the second binder to the liquid electrolyte is larger than 25%.

3. The electrode according to claim 1, **characterized in that** each of the first binder and the second binder includes a fluorine-containing binder.

4. The electrode according to claim 1, **characterized in that** a main constituting unit of the first binder and the second binder is the same.

5. The electrode according to claim 1, **characterized in that** each of the first layer and the second layer contains an active material.

6. The electrode according to claim 1, **characterized in that**

   each of the first layer and the second layer contains an active material and a conductive material;
   the first layer contains a first composite body in which the conductive material and the first binder are adhered to a surface of the active material; and
   the second layer contains a second composite body in which the conductive material and the second binder are adhered to a surface of the active material.

7. A battery including a cathode, an anode, and an electrolyte layer arranged between the cathode and the anode, **characterized in that**
   at least one of the cathode and the anode is the electrode according to any one of claims 1 to 6.

**8.** The battery according to claim 7, **characterized in that** the battery is a lithium ion battery.

**9.** A method for producing an electrode to be used for a battery, the method **characterized by** comprising:

a first layer forming step of forming a first layer containing a first binder by a dry method on a current collector; and a second layer forming step of forming a second layer containing a second binder by a dry method on a surface of the first layer that is opposite to the current collector side, and forming an electrode layer including the first layer and the second layer; wherein a degree of swelling of the first binder to a liquid electrolyte is lower than a degree of swelling of the second binder to the liquid electrolyte.

**10.** The method for producing the electrode according to claim 9, **characterized in that**

in the first layer forming step, a first composite body, in which a conductive material and the first binder are adhered to a surface of an active material, is pasted on the current collector by a dry method to form the first layer; and in the second layer forming step, a second composite body, in which a conductive material and the second binder are adhered to a surface of an active material, is pasted on a surface of the first layer that is opposite to the current collector side by a dry method, to form the second layer.

FIG. 1

FIG. 2

FIG. 3A

10

22

A — A

21

1

FIG. 3B

10

22
21 } 2
1

$D_L$

FIG. 4

Current collector

First layer forming step — S1

Second layer forming step — S2

Electrode

## FIG. 5

## FIG. 6

FIG. 7

Europäisches
Patentamt

European
Patent Office

Office européen
des brevets

# EUROPEAN SEARCH REPORT

Application Number

**EP 23 19 2999**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 914 393 A (ZHUHAI COSMX BATTERY CO LTD) 16 August 2022 (2022-08-16) | 1,4-8 | INV. H01M4/04 |
| A | * claims 1,3,10; examples * | 2,3,9,10 | H01M4/139 H01M4/62 |
| X | WO 2022/121863 A1 (ZHUHAI COSMX BATTERY CO LTD [CN]) 16 June 2022 (2022-06-16) | 1,5-8 | H01M10/0525 |
| A | * claims 1,20; examples 1-7 * | 2-4,9,10 | |

**TECHNICAL FIELDS SEARCHED (IPC)**

H01M

The present search report has been drawn up for all claims

| Place of search | Date of completion of the search | Examiner |
|---|---|---|
| Munich | 31 January 2024 | Duval, Monica |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 23 19 2999

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | | Publication date | Patent family member(s) | | Publication date |
|---|---|---|---|---|---|
| CN 114914393 | A | 16-08-2022 | NONE | | |
| WO 2022121863 | A1 | 16-06-2022 | CN | 112563453 A | 26-03-2021 |
| | | | US | 2023129049 A1 | 27-04-2023 |
| | | | WO | 2022121863 A1 | 16-06-2022 |

EPO FORM P0459

For more details about this annex : see Official Journal of the European Patent Office, No. 12/82

## REFERENCES CITED IN THE DESCRIPTION

**Patent documents cited in the description**

- JP 2001307716 A
- JP 2020136276 A
- JP 2019096501 A
- WO 2011142083 A